# EUROPÄISCHE PATENTSCHRIFT

(11) **EP 1 582 266 B1**
(45) Veröffentlichungstag und Bekanntmachung des Hinweises auf die Patenterteilung: **05.11.2008**
(21) Anmeldenummer: 05005674.6
(22) Anmeldetag: 16.03.2005
(51) Int. Cl.: B05B 7/14, B05C 19/00, B05C 19/02

(54) **Verfahren und Vorrichtung zur Herstellung von elektrochemischen oder elektrischen oder thermischen Funktionsschichten**
Method and device for production of electrochemical or electrical or thermal functional layers
Procédé et dispositif pour la fabrication d'une couche fonctionnelle électrochimique ou électrique ou thermique

(30) Priorität: 31.03.2004 DE 102004017161; 31.03.2004 DE 102004017162
(43) Veröffentlichungstag der Anmeldung: 05.10.2005
(73) Patentinhaber: Deutsches Zentrum für Luft- und Raumfahrt e.V., 51147 Köln (DE)
(72) Erfinder: Kaz, Till, 70186 Stuttgart (DE); Wagner, Norbert, 71065 Sindelfingen (DE); Gülzow, Erich, 71063 Sindelfingen (DE); Saballus, Martin, 23738 Thomsdorf (DE)
(74) Vertreter: Hoeger, Stellrecht & Partner Patentanwälte

(56) Entgegenhaltungen:
- EP-A- 1 273 354
- GB-A- 1 161 430
- US-A- 5 738 905
- US-A1- 2002 187 258

## Beschreibung

Die Erfindung betrifft ein Verfahren zur Herstellung von elektrochemischen oder elektrischen oder thermischen Funktionsschichten mittels Pulvermaterialien, bei dem Pulverpartikel mittels einer Aufbringeinrichtung auf einen Träger aufgebracht werden, und von der Aufbringeinrichtung Pulverpartikel auf den Träger übertragen werden, wobei die Aufbringeinrichtung elektrostatisch geladen ist oder wird.

Ferner betrifft die Erfindung eine Vorrichtung zur Herstellung von elektrochemischen oder elektrischen oder thermischen Schichten aus Pulvermaterialien auf einem Träger, mit einer Aufbringeinrichtung zum Übertragen von Pulverpartikeln auf den Träger, welche elektrostatisch geladen ist oder geladen werden kann, und einer Zuführungsvorrichtung für Pulver zu der Aufbringeinrichtung.

Verfahren zur Herstellung von elektrochemischen oder elektrischen oder thermischen Funktionsschichten, bei dem Pulverpartikel mittels einer Aufbringeinrichtung auf einen Träger aufgebracht werden und Vorrichtungen zur Herstellung von elektrochemischen oder elektrischen oder thermischen Funktionsschichten aus Pulvermaterialien auf einem Träger, mit einer Aufbringeinrichtung zum Übertragen von Pulverpartikeln auf den Träger und einer Zuführungsvorrichtung für Pulver zu der Aufbringeinrichtung werden beispielsweise eingesetzt, um elektrochemische Elektroden wie Gasdiffusionselektroden oder Brennstoffzellenelektroden herzustellen. Durch solche Verfahren und Vorrichtungen lassen sich auch elektrische Schichten beispielsweise für Kondensatoren oder auf Leiterplatten herstellen. Elektrische Schichten können als elektrochemische Schichten ohne Stoffumsatz angesehen werden. Es lassen sich auch thermische Schichten herstellen, die besondere Wärmeleitfähigkeitseigenschaften haben. Beispielsweise läßt sich eine thermische Pufferschicht mit erniedrigter Wärmeleitfähigkeit herstellen.

Aus der DE 195 09 748 C2 und US 5,738,905 ist ein Verfahren zur Herstellung eines Verbunds aus Elektrodenmaterial, Katalysatormaterial und einer Festelektrolytmembran für eine elektrochemische Zelle bekannt, bei welchem Festelektrolytmaterial durch Erweichen desselben in porentiefen Kontakt mit dem Elektrodenmaterial und dem Katalysatormaterial gebracht wird. Es wird dabei ein Elektrodenmaterial, Katalysatormaterial und Festelektrolytmaterial umfassendes elektrolytisches Pulver hergestellt; das Pulver wird auf einer Fläche angeordnet und auf einer der Fläche abgewandten Seite zum Erweichen des Festelektrolytmaterials aufgeheizt. Anschließend wird das katalytische Pulver mit der der Fläche abgewandten Seite bei noch erweichtem Festelektrolytmaterial zur Bildung eines Verbunds unter Druck auf die Festelektrolytmembran aufgebracht und von der Fläche gelöst.

Aus der EP 1 273 345 A2 ist ein Verfahren zur Pulverauftragung auf einen Träger bekannt, bei dem homogenisiertes Pulver einer Pulverfördervorrichtung zugeführt wird, aus welcher Pulver über einen Gasstrom mittels eines Schöpfrohrs ausgetragen wird. In der Pulverfördervorrichtung wird über einen ersten Gasstrom eine schwebende Pulverwolke gebildet, welche über einen zweiten Gasstrom zerstäubt wird. Eine Eintrittsöffnung des Schöpfrohrs ist in die zerstäubte Pulverwolke zur Pulveraustragung gerichtet.

Aus der US 2002/0187258 A1 ist eine Vorrichtung zur Pulveraufbringung auf Objekte bekannt, bei der ein Pulverbett fluidisiert wird, um eine Pulverwolke zu bilden. Ein Pulverstrom wird von der Pulverwolke aus erzeugt.

Aus der GB 1,161,430 ist ein Verfahren zur Aufbringung einer gleichmäßigen Pulverbeschichtung bekannt, bei dem Pulver über einen aufwärtsgerichteten Gasstrom fluidisiert wird und fluidisiertes Pulver nach oben gerichtet wird, um einen kontinuierlichen Streifen zu beschichten.

Der Erfindung liegt die Aufgabe zugrunde, ein Verfahren und eine Vorrichtung der eingangs genannten Art so zu verbessern, daß auch feine Pulver auf einen Träger aufbringbar sind.

Diese Aufgabe wird bei dem eingangs genannten Verfahren erfindungsgemäß dadurch gelöst, daß der Aufbringeinrichtung die Pulverpartikel in Form einer Pulverwolke zugeführt werden.

Erfindungsgemäß wird der Aufbringeinrichtung wie beispielsweise einer (Aufbring-)Walze das Pulver in Form einer Pulverwolke zugeführt. Dadurch lassen sich auch sehr feine Pulverpartikel auf die Aufbringeinrichtung aufbringen und von dort auf den Träger übertragen. Es hat sich gezeigt, daß mit der erfindungsgemäßen Lösung auch Pulver mit einer mittleren Partikelgröße von kleiner als 1 µm auf einen Träger aufbringbar sind. Beispielsweise haben sich Pulver mit einem mittleren Partikeldurchmesser von 30 nm verarbeiten lassen.

Von der Aufbringeinrichtung werden Pulverpartikel auf den Träger übertragen. Beispielsweise ist eine Aufbring-Walze oder eine Aufbring-Platte vorgesehen.

Die Aufbringeinrichtung ist oder wird elektrostatisch geladen. Dadurch können Pulverpartikel an der Oberfläche der Aufbringeinrichtung, wenn die Aufbringeinrichtung der Pulverwolke ausgesetzt wird, haften und somit über die Walze auf den Träger übertragen werden (xerografische Pulveraufbringung).

Da durch die erfindungsgemäße Lösung auch sehr feine Pulver auf einen Träger aufbringbar sind, lassen sich Strukturen mit hoher Auflösung herstellen. Dies ist für die Herstellung von elektrochemischen oder elektrischen oder thermischen Funktionsschichten vorteilhaft. Beispielsweise können elektrochemische Funktionsschichten von Brennstoffzellen oder elektrische Funktionsschichten von Leiterplatten hergestellt werden.

Das erfindungsgemäße Verfahren läßt sich auf einfache Weise durchführen, wobei eine entsprechende Vorrichtung kompakt aufgebaut werden kann, da beispielsweise keine Düse zum Aufsprühen auf den Träger vorgesehen werden muß.

Da die Aufbringeinrichtung einer Pulverwolke ausgesetzt wird, läßt sich auch der Pulververbrauch minimieren.

Günstigerweise wird ein Bereich der Aufbringeinrichtung mit einer Pulverwolke beaufschlagt. Der beaufschlagte Bereich ist dabei derjenige Bereich, der bei Weiterbewegung wie beispielsweise Weiterrotation bei einer Walze in Kontakt mit dem Träger kommt, um Pulverpartikel auf den Träger zu übertragen. Vorzugsweise ist der beaufschlagte Bereich vor Beaufschlagung mit Pulver so präpariert worden, daß Pulver an definierten Stellen haften bleibt, um dann ein entsprechendes Muster auf dem Träger erzeugen zu können.

Insbesondere wird die Aufbringeinrichtung der Pulverwolke ausgesetzt. Es muß dann keine Übertragungswalze vorgesehen werden. Durch die erfindungsgemäße Lösung können auch sehr feine Pulver verarbeitet werden.

Insbesondere wird Pulver aus einem Pulvervorrat und/oder einer Pulverherstellungsvorrichtung direkt der Aufbringeinrichtung zugeführt. Dadurch entsteht nicht das Problem, daß Pulver an einer Übertragungswalze für eine Aufbringeinrichtung wie eine Aufbring-Walze haften bleiben kann.

Ganz besonders vorteilhaft ist es, wenn von einer Mündungsöffnung einer Pulverzuführungsvorrichtung aus Pulverpartikel direkt auf die Aufbringeinrichtung übertragen werden. Die Aufbringeinrichtung ist dann einer Pulverwolke ausgesetzt und erhält die Pulverpartikel, die auf den Träger zu übertragen sind, direkt aus der Pulverwolke. Dadurch lassen sich auch feine Pulver auf einen Träger übertragen.

Insbesondere sind oder werden auf der Aufbringeinrichtung definierte geladene und/oder ungeladene Bereiche erzeugt. Dadurch läßt sich steuern, wo das Pulver auf der Oberfläche der Aufbringeinrichtung haften bleibt. Dies wiederum ermöglicht es, die Aufbringung von Pulver auf den Träger örtlich zu steuern, d. h. es lassen sich Bereiche auf dem Träger definieren, auf welchen kein Pulver aufgebracht wird, und es lassen sich Bereiche definieren, auf die Pulver aufgebracht wird. Es kann dadurch ein definiertes Aufbringungsmuster auf dem Träger eingestellt werden.

Insbesondere ist es möglich, im Zusammenhang mit dem erfindungsgemäßen Verfahren xerografische Techniken einzusetzen. Beispielsweise ist eine Walze als Aufbringeinrichtung eine Fotowalze. Die Walze weist eine fotosensitive Oberflächenschicht auf. Die Walze wird elektrostatisch geladen. Durch Belichtung definierter Bereiche erfolgt in den belichteten Bereichen eine Entladung. Für Pulver, bei denen die Pulverpartikel an geladenen Stellen anhaften, ergibt sich dann keine Anhaftung an den entladenen Bereichen. Dadurch lassen sich dann Pulverpartikel in einem definierten eingestellten Muster auf den Träger aufbringen.

Es kann vorgesehen sein, daß auf den Träger aufgebrachte Pulverpartikel fixiert werden, um so fest haftende Pulverpartikelschichten zu erzeugen.

Insbesondere erfolgt die Fixierung durch Walzung. Fixierungswalzen können auch gleichzeitig als Transportwalzen zum Transport des Trägers an einer Aufbringstation vorbei verwendet werden.

Wenn der Träger an einer Mehrzahl von Aufbringstationen zur Aufbringung von Pulverpartikeln auf den Träger vorbeigeführt wird und an den einzelnen Aufbringstationen die Aufbringung von Pulverpartikeln auf den Träger individuell räumlich gesteuert wird, dann lassen sich Schichten mit definierten Eigenschaften erzeugen. Es lassen sich so Schichten mit definierter räumlicher Struktur herstellen, wobei an unterschiedlichen Aufbringstationen unterschiedliche Pulvermaterialien aufgebracht werden können. Es lassen sich so insbesondere trockene Pulver verarbeiten. Die Struktur kann auch lokal definiert eingestellt erzeugt werden. Dadurch ist es möglich, beispielsweise Dreiphasengebiete zu erzeugen, wie sie für Brennstoffzellenelektroden notwendig sind. In Dreiphasengebieten treffen Protonenleiter, Elektronenleiter und Katalysator zusammen. Die Dreiphasengebiete müssen auch so ausgebildet sein, daß Reaktionsgase sie erreichen können. Dadurch, daß die Aufbringung von Pulverpartikeln an den einzelnen Aufbringstationen individuell gesteuert wird, lassen sich definierte räumliche Strukturen mit hoher Auflösung herstellen, über die die chemischen und physikalischen Eigenschaften auch lokal einstellbar sind. Die elektrochemische oder elektrische oder thermische Schicht läßt sich dadurch lokal optimieren. Die Schichten lassen sich mikroskopisch aufbauen. Beispielsweise kann für den Anwendungsfall der Brennstoffzellenelektrode über das erfindungsgemäße Verfahren direkt neben ein Katalysatorpartikel ein protonenleitendes Partikel gesetzt werden, indem in einer Aufbringstation Katalysatorpartikel an definierten Stellen aufgebracht werden und in einer weiteren Station protonenleitende Partikel an definierten Stellen aufgebracht werden. Mittels des erfindungsgemäßen Verfahrens kann eine gezielte Anpassung beispielsweise auf die Inhomogenitäten im Reaktionsverlauf durchgeführt werden. Durch die räumliche Strukturierung der Aufbringung kann eine Anpassung erfolgen, welche die Eigenschaften der Schicht verbessert. Durch das erfindungsgemäße Verfahren ist es beispielsweise möglich, beliebige Elektrodenformen herzustellen.

Das erfindungsgemäße Verfahren erlaubt es kostengünstig optimierte Schichten und insbesondere optimierte Elektroden für vorgegebene Anforderungsprofile herzustellen. Insbesondere erlaubt es das erfindungsgemäße Verfahren in der Fläche inhomogene Schichten (bezogen auf Materialmenge und/oder Materialart) herzustellen.

Günstigerweise sind die Aufbringstationen in einer Reihe angeordnet (beispielsweise nebeneinander oder hintereinander). Ein bestimmter Bereich des Trägers läßt sich so nacheinander an verschiedenen Aufbringstationen vorbeiführen, so daß Pulverpartikel auf diesen bestimmten Bereich in definierter räumlicher Anordnung aufbringbar sind.

Günstig ist es, wenn jeder Aufbringstation Pulver individuell zugeführt wird. Dadurch kann die Materialzusammensetzung der herzustellenden Schicht gesteuert werden. Insbesondere weist eine jeweilige Aufbringstation eine Aufbringeinrichtung auf, welcher Pulver zugeführt wird. Über die Aufbringeinrichtung werden Pulverpartikel auf den Träger übertragen.

Günstig ist es, wenn über unterschiedliche Aufbringstationen unterschiedliche Pulvermaterialien auf den Träger aufgebracht werden. Es läßt sich dadurch ein definierter Schichtaufbau bezüglich Material und räumlicher Strukturierung erzielen. Dadurch wiederum lassen sich die chemischen und physikalischen Eigenschaften lokal definiert einstellen.

Insbesondere wird durch das Vorbeiführen des Trägers an den Aufbringstationen eine elektrochemische oder elektrische oder thermische Schicht mit räumlich definierter Zusammensetzung aus Pulverpartikeln hergestellt. Bei der elektrochemischen oder elektrischen oder thermischen Schicht kann es sich um eine Reaktionsschicht oder andere Funktionsschichten handeln. Die Funktionsschicht kann auch als Strukturschicht dienen (beispielsweise zur Bildung von Gaskanälen).

Insbesondere werden die chemischen und physikalischen Eigenschaften der Schicht durch Steuerung der Pulveraufbringung eingestellt. Die Einstellung erfolgt über Materialwahl bei der Pulveraufbringung und Steuerung der räumlichen Aufbringung. Es lassen sich dadurch auch lokale Bereiche mit definierten chemischen und physikalischen Eigenschaften herstellen, wobei unterschiedliche lokale Bereiche unterschiedliche Eigenschaften aufweisen können.

Es ist günstig, wenn eine Fixierung der hergestellten Schicht erfolgt. Dies erfolgt vorzugsweise über Walzung.

Es kann auch vorgesehen sein, daß der Träger ohne aufgebrachte Schicht, mit aufgebrachter Schicht oder mit teilweise aufgebrachter Schicht elektrisch aufgeladen wird. Dies kann unter Umständen zu einer Verbesserung der Eigenschaften führen.

Die eingangs genannte Aufgabe wird bei der eingangs genannten Vorrichtung erfindungsgemäß dadurch gelöst, daß über die Zuführungsvorrichtung die Aufbringeinrichtung mit einer Pulverwolke beaufschlagbar ist.

Die Vorteile der erfindungsgemäßen Lösung wurden bereits im Zusammenhang mit dem erfindungsgemäßen Verfahren erläutert.

Weitere vorteilhafte Ausführungsformen wurden ebenfalls bereits im Zusammenhang mit dem erfindungsgemäßen Verfahren erläutert.

Ganz besonders vorteilhaft ist es, wenn die Zuführungsvorrichtung eine Mündungsöffnung umfaßt, welche auf die Aufbringeinrichtung zu weist. Es lassen sich dann Pulverpartikel über die Pulverwolke direkt auf eine Oberfläche der Aufbringeinrichtung aufbringen bzw. übertragen, um von dort dann auf den Träger übertragen werden zu können.

Insbesondere liegt die Mündungsöffnung der Aufbringeinrichtung direkt gegenüber, so daß die Oberfläche der Aufbringeinrichtung mit Pulverpartikeln aus der Pulverwolke direkt beaufschlagbar ist.

Günstigerweise ist die Mündungsöffnung in ihrer Gestalt an die Aufbringeinrichtung angepaßt. Dadurch läßt sich zum einen erreichen, daß der relevante Oberflächenbereich der Aufbringeinrichtung, d. h. der Oberflächenbereich, auf welchen Pulverpartikel aus der Pulverwolke übertragen werden sollen, eben direkt der Pulverwolke ausgesetzt wird. Darüber hinaus kann bei entsprechender Ausgestaltung auch der Pulververbrauch minimiert werden, indem der Anteil an Pulver, welcher nicht an der Aufbringeinrichtung haften bleibt und zwischen der Mündungsöffnung und der Aufbringeinrichtung austritt, minimiert wird.

Die Zuführungsvorrichtung und/oder eine Mündungsöffnung der Zuführungsvorrichtung steht vorteilhafterweise in fluidwirksamer Verbindung mit einem Pulvervorrat und/oder einer Pulverherstellungsvorrichtung. Dadurch wird es auf einfache Weise ermöglicht, daß Pulverpartikel aus einer Pulverwolke auf die Aufbringeinrichtung übertragbar sind.

Erfindungsgemäß ist die Aufbringeinrichtung elektrostatisch geladen oder kann geladen werden. Es lassen sich dann xerografische Techniken zur Pulveraufbringung einsetzen.

Insbesondere sind definierte Bereiche der Aufbringeinrichtung elektrostatisch ladbar und/oder entladbar, um so Pulverpartikel gemäß einem vorgegebenen Muster auf den Träger aufbringen zu können.

Beispielsweise ist eine Walze als Aufbringeinrichtung als Fotowalze ausgebildet, bei der elektrostatisch entladene Bereiche durch Beleuchtung erzeugbar sind.

Es ist günstig, wenn eine Fixierungseinrichtung zur Fixierung von auf den Träger aufgebrachten Pulverpartikeln vorgesehen ist. Es läßt sich dadurch eine haftende Schicht erzeugen bzw. die Haftungswirkung läßt sich erhöhen.

Beispielsweise umfaßt die Fixierungseinrichtung eine oder mehrere Fixierungswalzen. Diese können beheizt oder unbeheizt sein. Die Fixierungswalzen lassen sich dabei gleichzeitig auch als Transportwalzen zur Durchführung des Trägers durch eine Aufbringstation für Pulverpartikel verwenden.

Es kann eine Mehrzahl von Aufbringstationen vorgesehen sein, an welchen der Träger vorbeiführbar ist, wobei die Pulveraufbringung an jeder Aufbringstation individuell steuerbar ist.

Insbesondere sind die Aufbringstationen nebeneinander bzw. hintereinander angeordnet und/oder in einer Reihe. Bei der Führung des Trägers kann dann ein bestimmter Trägerbereich zeitlich nacheinander mit beispielsweise unterschiedlichen Pulvermaterialien beaufschlagt werden, um so definierte Eigenschaften einstellen zu können.

Insbesondere ist die Pulveraufbringung an jeder Aufbringstation räumlich steuerbar, das heißt es erfolgt eine räumlich gesteuerte Pulveraufbringung, bei der die Schicht mikroskopisch aufgebaut wird, indem Pulverpartikel eines bestimmten Pulvermaterialtyps an definierten Stellen des Trägers aufgebracht werden.

Günstig ist es dann, wenn jeder Aufbringstation individuell Pulver zuführbar ist. Dadurch lassen sich in einer Schicht auch unterschiedliche Pulvermaterialien einsetzen.

Es ist auch möglich, daß ein oder mehrere Aufladungseinrichtungen zur Aufladung des Trägers vorgesehen sind. Es kann günstig sein, wenn der Träger ohne Schicht, mit Schicht oder mit teilweiser Schicht elektrisch aufgeladen wird und insbesondere vor der Fixierung aufgeladen wird. Es ist dadurch möglich, bei manchen Materialien die Porengröße zu beeinflussen und damit zu einer Eigenschaftsverbesserung zu sorgen.

Die nachfolgende Beschreibung bevorzugter Ausführungsformen dient im Zusammenhang mit der Zeichnung der näheren Erläuterung der Erfindung. Es zeigen:
- Figur 1: eine schematische Darstellung eines Ausführungsbeispiels einer erfindungsgemäßen Vorrichtung zur Herstellung von elektrochemischen oder elektrischen oder thermischen Schichten;
- Figur 2: eine schematische Darstellung eines weiteren Ausführungsbeispiels einer erfindungsgemäßen Vorrichtung; und
- Figur 3(a): eine schematische Darstellung einer auf einem Träger hergestellten Schicht; und
- Figur 3(b): einen schematischen vergrößerten Ausschnitt aus der Schicht gemäß Figur 3(a), angedeutet durch die Lupe in Figur 3(a).

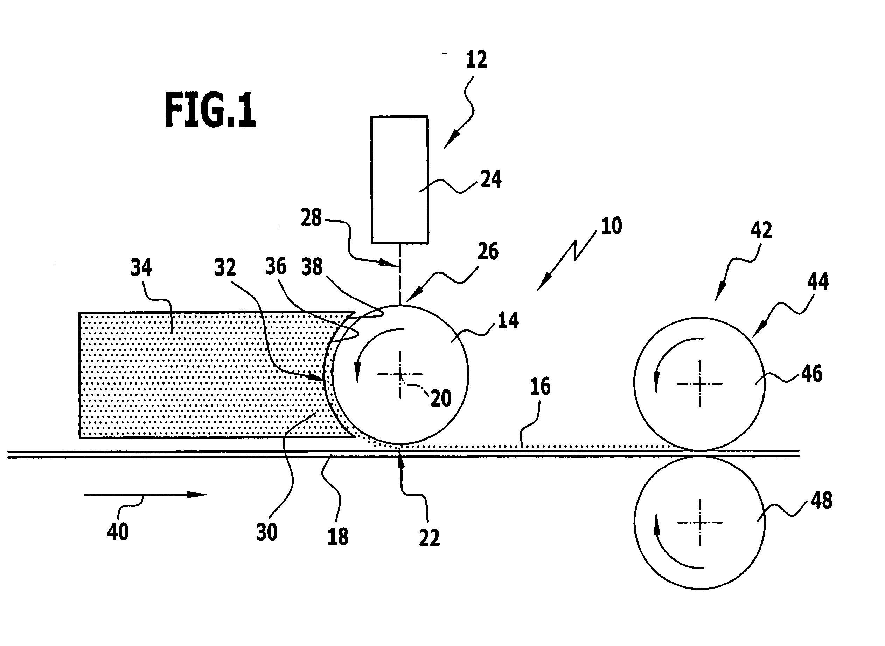

Ein Ausführungsbeispiel einer erfindungsgemäßen Vorrichtung zur Herstellung von elektrochemischen oder elektrischen oder thermischen Funktionsschichten, welches in Figur 1 schematisch gezeigt und dort als Ganzes mit 10 bezeichnet ist, umfaßt eine Aufbringstation 12 mit einer Walze 14 als Beispiel einer Aufbringeinrichtung zum Aufbringen von (trockenen) Pulverpartikeln 16 auf einen Träger 18.

Die (Aufbring-)Walze 14 ist um eine Achse 20 rotierbar gelagert. Die Achse 20 ist im wesentlichen parallel zu dem Träger 18 mindestens in einem Aufbringbereich 22 ausgerichtet.

Bei der Walze 14 handelt es sich insbesondere um eine Fotowalze, mit der die Pulverpartikel 16 xerografisch auf den Träger 18 aufbringbar sind. Die Walze 14 ist dazu elektrostatisch geladen. Durch Belichtung mittels einer Belichtungseinrichtung 24 lassen sich definierte Oberflächenbereiche der geladenen Walze 14 entladen. Es läßt sich dadurch auf der Oberfläche der Walze 14 ein definiertes Muster an geladenen und ungeladenen Bereichen herstellen, wobei dann der Walze 14 zugeführte Pulverpartikel gemäß diesem Muster an der Walzenoberfläche haften und bei Übertragung der Pulverpartikel auf den Träger 18 das Muster auf dem Träger 18 abgebildet wird. Bei der Abbildung kann es sich um eine Negativabbildung oder Positivabbildung handeln, je nach dem ob die Pulverpartikel an der Walze 14 an den geladenen oder ungeladenen Bereichen haften bleiben. Dies hängt von dem Pulvermaterial ab. Üblicherweise haften Pulverpartikel an den geladenen Stellen.

Der bzw. die durch die Belichtungseinrichtung 24 belichteten Bereiche 26 der Oberfläche der Walze 14 sind beispielsweise durch eine Steuerungseinrichtung einstellbar, so daß das Aufbringungsmuster der Pulverpartikel auf den Träger 18 einstellbar ist.

Die Belichtungseinrichtung 24 ist so angeordnet, daß die elektromagnetische Strahlung 28, mit welcher die Belichtungseinrichtung 24 auf die Walze 14 wirkt, außerhalb einer Pulverzuführung auf die Walze 14 die Walze 14 erreicht.

Erfindungsgemäß ist es vorgesehen, daß der Walze 14 Pulverpartikel in Form einer Pulverwolke 30 zugeführt werden. Die Walze 14 ist in einem Bereich 32 einer Pulverwolke ausgesetzt, wobei dann Pulverpartikel aus der Pulverwolke auf der Walze 14 entsprechend dem Oberflächenladungsmuster dort haften bleiben. Die Pulverpartikel werden aus der Pulverwolke direkt auf die Walze 14 übertragen. Dazu ist eine Zuführungsvorrichtung 34 für Pulverpartikel zu der Walze 14 vorgesehen. Die Zuführungsvorrichtung steht in fluidwirksamer Verbindung mit einem Pulvervorrat (in der Zeichnung nicht gezeigt) und/oder mit einer Pulverherstellungsvorrichtung (in der Figur nicht gezeigt). Bei der Pulverherstellungsvorrichtung kann es sich beispielsweise um eine Homogenisierungsvorrichtung handeln, wie sie in der DE 101 54 123 A1 beschrieben ist.

Grundsätzlich ist es auch möglich, daß die Zuführungsvorrichtung 34 eine Pulverfördervorrichtung umfaßt, wie sie in der EP 1 273 354 A2 beschrieben ist. Es ist dabei vorteilhafterweise ein Gasstrom mindestens nicht direkt auf die Walze 14 gerichtet.

Die Zuführungsvorrichtung weist eine Mündungsöffnung 36 auf, welche der Walze 14 zugewandt ist und insbesondere dem Bereich 32 der Walze zugewandt ist. Die Mündungsöffnung 36 ist so ausgebildet und insbesondere in ihrer Form so an die Walze 14 angepaßt, daß der Anteil an Pulverpartikeln, welcher aus der Mündungsöffnung 36 austritt und nicht die Walze 14 erreicht, minimiert ist.

Beispielsweise ist ein äußeres Ende 38 der Mündungsöffnung 36 zylinderkreisbogenförmig ausgestaltet und damit angepaßt an die Zylinderform der Walze 14.

Die in der Zuführungsvorrichtung 34 an der Mündungsöffnung 36 gebildete oder an die Mündungsöffnung 36 geführte Pulverwolke 30 beaufschlagt dann die Walze 14, so daß Pulverpartikel von der Walze 14 auf deren Oberfläche übernommen werden können.

Durch Rotation der Walze 14 werden aufgenommene Pulverpartikel auf den Träger 18 übertragen.

Es ist grundsätzlich möglich, daß der Träger 18 örtlich stationär ist und die Aufbringstation 12 translatorisch relativ zu dem Träger 18 bewegt wird. Günstigerweise ist es jedoch vorgesehen, daß die Aufbringstation 12 örtlich stationär ist und der Träger 18 in einer Bewegungsrichtung 40 relativ zu der Aufbringstation 12 bewegt wird. Zur Bewegung des Trägers 18 in der Bewegungsrichtung 40 sind entsprechende Transportwalzen vorgesehen (in der Zeichnung nicht gezeigt).

Zur Fixierung der Pulverpartikel, welche auf den Träger 18 über die Walze 14 aufgebracht sind, kann eine Fixierungsstation 42 mit einer Fixierungseinrichtung 44 vorgesehen sein. Die Fixierungseinrichtung 44 umfaßt beispielsweise eine erste Fixierungswalze 46, welche auf der einen Seite des Trägers angeordnet ist, und eine zweite Fixierungswalze 48, welche gegenüberliegend auf der anderen Seite des Trägers angeordnet ist. Der Träger 18 mit aufgebrachten Pulverpartikeln ist zwischen den beiden Fixierungswalzen 46, 48 durchführbar. Die beiden Fixierungswalzen 46, 48 rotieren gegenläufig, wobei die erste Fixierungswalze 46, welche auf der gleichen Seite des Trägers 18 angeordnet ist wie die Walze 14, gleichsinnig mit der Walze 14 rotiert.

Der Betrag der Rotationsgeschwindigkeiten der Walzen 14, 46 und 48 ist im wesentlichen gleich.

Die beiden Fixierungswalzen 46, 48 können auch als Transportwalzen dienen.

Es kann vorgesehen sein, daß mindestens eine der Fixierungswalzen (und dabei vorzugsweise die Fixierungswalze 46, welche direkt auf die Pulverpartikel wirkt) beheizbar ist, um die Fixierungswirkung zu verbessern.

Das erfindungsgemäße Verfahren zur Herstellung von Funktionsschichten funktioniert wie folgt:

Über die Zuführungsvorrichtung 34 wird ein Oberflächenbereich der Walze 14 einer Pulverwolke 30 ausgesetzt, d. h. diese Oberfläche wird mit Pulverpartikeln in einer Pulverwolke 30 beaufschlagt. Je nach Pulver bleiben die Pulverpartikel an elektrostatisch geladenen oder ungeladenen Bereichen der Walze 14 haften. Die elektrostatisch ungeladenen Bereiche wurden dabei über die Belichtungseinrichtung 24 erzeugt.

Die an der Walze 14 haftenden Pulverpartikel werden dann über Rotation der Walze 14 auf den Träger 18 übertragen; auf dem Träger 18 wird dann eine entsprechende Pulverpartikelschicht ausgebildet. Diese Pulverpartikelschicht kann über die Fixierungseinrichtung 44 fixiert werden.

Bei der erfindungsgemäßen Lösung werden die Pulverpartikel aus der Pulverwolke direkt der Walze 14 zugeführt. Insbesondere ist keine der Walze 14 vorgeschaltete Übertragungswalze für Pulverpartikel vorgesehen. Durch die erfindungsgemäße Lösung lassen sich Pulver auch mit sehr kleinem mittleren Partikeldurchmesser (wie beispielsweise in der Größenordnung von 30 nm) auf einen Träger 18 übertragen. Durch die erfindungsgemäße Lösung ist es möglich, eben Pulver mit kleiner mittlerer Partikelgröße zu verwenden. Es lassen sich dadurch Strukturen auf einem Träger 18 mit besserer Auflösung ausbilden. Darüber hinaus läßt sich der Pulververlust während des Aufbringverfahrens minimieren. Die entsprechende Aufbringvorrichtung 10 läßt sich kompakt ausbilden.

Die Aufbringeinrichtung kann beispielsweise anstatt einer Walze eine Platte umfassen, welche der Pulverwolke ausgesetzt wird. Die Platte wird dann mit anhaftenden Pulverpartikeln auf den Träger 18 zubewegt.

Durch das erfindungsgemäße Verfahren und die erfindungsgemäße Vorrichtung lassen sich elektrochemische Funktionsschichten wie beispielsweise Reaktionsschichten für eine Brennstoffzelle herstellen. Es lassen sich so mehrdimensionale Reaktionsschichten mit feinen Strukturen ausbilden.

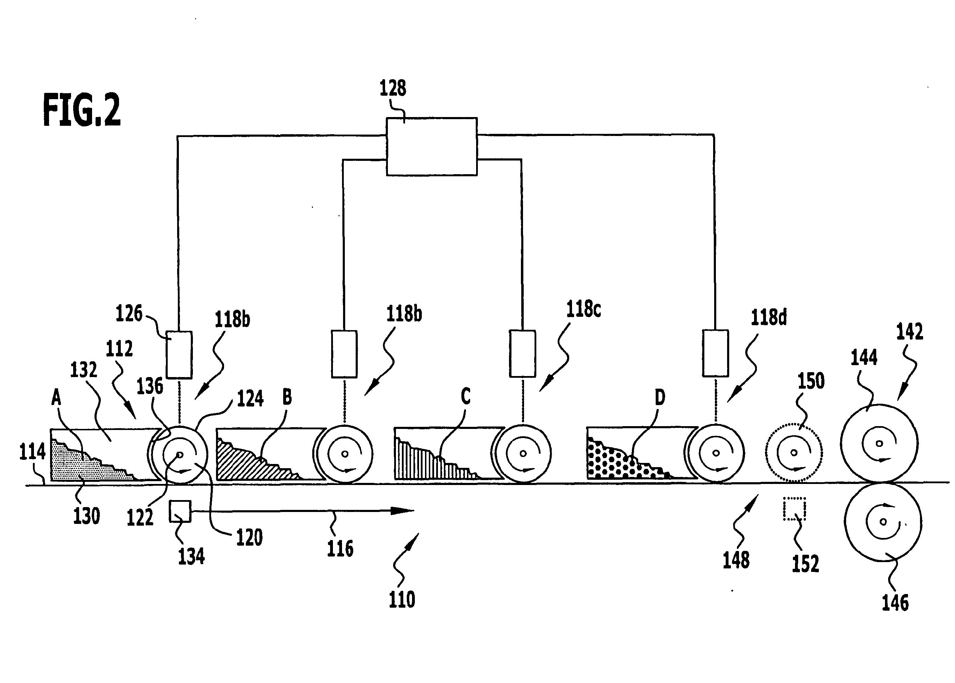

Ein weiteres Ausführungsbeispiel einer erfindungsgemäßen Vorrichtung zur Herstellung von elektrochemischen oder elektrischen oder thermischen Schichten, welches in Figur 2 gezeigt und dort als Ganzes mit 110 bezeichnet ist, umfaßt eine Mehrzahl von Aufbringstationen 112, über die Pulverpartikel auf einen Träger 114 aufbringbar sind.

Die Aufbringstationen 112 sind vorzugsweise ortsfest angeordnet und der Träger 114 ist an diesen Aufbringstationen 112 vorbeiführbar und beispielsweise durch diese durchführbar. Der Träger 114 wird dazu beispielsweise über Transportwalzen in einer Bewegungsrichtung 116 bewegt.

In dem Ausführungsbeispiel gemäß Figur 2 sind vier Aufbringstationen 118a, 118b, 118c und 118d gezeigt. Diese Aufbringstationen 118a, 118b, 118c, 118d liegen in einer Reihe in Bewegungsrichtung 116 nebeneinander, d. h. hintereinander, so daß bei Transport des Trägers 114 an den Aufbringstationen 118a, 118b, 118c, 118d vorbei zeitlich nacheinander an jeder Aufbringstation 118a, 118b, 118c, 118d Pulverpartikel auf einen bestimmten Bereich des Trägers 114 aufbringbar sind.

Durch die Anordnung der Aufbringstation 118a, 118b, 118c, 118d nebeneinander lassen sich räumlich definierte Schichten mit definierten physikalischen und chemischen Eigenschaften aufbringen.

Ein beispielhafter Aufbau einer Aufbringstation 112 wird anhand der Aufbringstation 118a erläutert. Diese umfaßt eine Aufbringeinrichtung 120, über die Pulverpartikel auf den Träger 114 übertragbar sind. Insbesondere ist eine (Aufbring-)Walze als Aufbringeinrichtung 120 vorgesehen. Die Walze 120 ist drehbar gelagert, wobei eine entsprechende Drehachse 122 parallel zu einer zu beschichtenden Oberfläche des Trägers 114 angeordnet ist. Die Drehrichtung der Walze 120 ist so, daß ihre Umfangsgeschwindigkeit am Träger 114 parallel zur Bewegungsrichtung 116 des Trägers 114 ist.

Die Walze 120 wird oder ist elektrostatisch geladen. Insbesondere ist sie als Fotowalze ausgebildet mit einer fotosensitiven Oberfläche 124. Die Aufbringstation 118a weist dazu ferner eine Belichtungseinrichtung 126 auf, über welche ein Oberflächenbereich der Walze 120 beleuchtbar ist. Der Oberflächenbereich bzw. die Oberflächenbereiche, die beleuchtet werden, lassen sich dabei definiert einstellen. Dazu ist eine Steuerungseinrichtung 128 vorgesehen, über welche eben die belichteten Bereiche räumlich einstellbar sind.

An belichteten Stellen wird die Walze 120 an der Oberfläche entladen. Durch die Beleuchtungseinstellung der Steuerungseinrichtung 128 lassen sich daher an der Oberfläche 124 der Walze 120 definiert elektrostatisch geladene und elektrostatisch nicht geladene Bereiche einstellen.

Der Walze 120 wird Pulver 130 zugeführt. Dazu ist eine Zuführungseinrichtung 132 vorgesehen. Die Zuführungseinrichtung 132 stellt der Walze 120 Pulver bereit, welches dann an deren Oberfläche 124 anhaftet und bei Weiterrotation von der Walze 120 auf den Träger 114 übertragen wird.

Das Muster der Pulverpartikel auf der Oberfläche 124 der Walze 120 wird durch das Muster der geladenen und entladenen Bereiche auf der Oberfläche 124 der Walze 120 eingestellt und damit durch die Steuerungseinrichtung 128 mittels der Belichtungseinrichtung 126 eingestellt. Üblicherweise haften Pulverpartikel an geladenen Stellen. Es gibt jedoch auch Pulver, bei denen die Pulverpartikel an den ungeladenen Bereichen haften.

Es kann noch vorgesehen sein, daß der elektrostatischen geladenen bzw. ladbaren Walze ein Koronadraht 134 gegenüberliegt und dabei insbesondere auf der anderen Seite des Trägers 114 liegt, das heißt auf derjenigen Seite, welche der Aufbringseite abgewandt ist.

Es kann vorgesehen sein, daß über die Zuführungseinrichtung 132 der Walze 120 Pulver in Form einer Pulverwolke zuführbar ist. Die Zuführungseinrichtung 132 weist dazu eine Mündungsöffnung 136 auf, welche der Walze 120 zugewandt ist. Die Mündungsöffnung 136 kann dabei an die Form der Walze 120 angepaßt sein.

Über die Zuführungseinrichtung 132 läßt sich dann ein Bereich der Walze 120, welcher über die Belichtungseinrichtung 126 definiert mit geladenen und entladenen Stellen präpariert wurde, mit einer Pulverwolke beaufschlagen. Der entsprechende Bereich wird also einer Pulverwolke ausgesetzt. Von der Mündungsöffnung 136 werden Pulverpartikel in Form einer Pulverwolke direkt auf die Walze 120 übertragen. Über die Zuführungseinrichtung 132 mit der Mündungsöffnung 136, welche auf die Walze 120 zuweist und der Walze 120 direkt gegenüberliegt, läßt sich also die Walze 120 mit einer Pulverwolke beaufschlagen.

Bei dieser Lösung werden die Pulverpartikel aus der Pulverwolke direkt der Walze 120 zugeführt. Insbesondere ist keine der Walze 120 vorgeschaltete Übertragungswalze für Pulverpartikel vorgesehen. Es lassen sich dadurch auch Pulver mit sehr kleinen mittleren Durchmessern (wie beispielsweise kleiner als 1 µm und insbesondere in der Größenordnung von 30 nm) auf den Träger 114 übertragen. Es ist dadurch möglich, eben Pulver mit kleiner mittlerer Partikelgröße zu verwenden. Dadurch wiederum lassen sich Strukturen auf dem Träger 114 mit hoher Auflösung ausbilden.

Es ist beispielsweise auch möglich, daß eine Aufbringeinrichtung mittels einer Platte gebildet wird, welche elektrostatisch geladen ist oder wird und welcher Pulverpartikel zugeführt werden. Von der Platte werden dann Pulverpartikel auf den Träger 114 übertragen.

Ein bestimmter Bereich des Trägers 114 durchläuft die Aufbringstation 118a. Er wird dann weitertransportiert zu der nächstliegenden Aufbringstation 118b. Diese ist grundsätzlich gleich ausgebildet wie eben anhand der Aufbringstation 118a beschrieben. An der Aufbringstation 118a läßt sich ein Pulvermaterial A auf den Träger 114 aufbringen, wobei die Aufbringung räumlich gesteuert ist, das heißt es lassen sich definierte Bereiche auf dem Träger 114 einstellen, auf welche Pulverpartikel des Pulvers A aufgebracht werden oder eben nicht aufgebracht werden. Ein ähnlicher Vorgang kann dann durch die Aufbringstation 118b mit einem Pulver B durchgeführt werden, wobei hier wiederum definierte räumliche Bereiche einstellbar sind. Eine Belichtungseinrichtung der Aufbringstation 118b ist entsprechend an die Steuerungseinrichtung 128 gekoppelt.

Entsprechend läßt sich durch die Aufbringstation 118c ein Pulver C und durch die Aufbringstation 118d ein Pulver D auf den Träger 114 aufbringen.

Es läßt sich dadurch auf einen Bereich des Trägers 114 eine definierte räumliche Struktur aus Pulverpartikeln der Pulver A, B, C und D aufbringen. Für die hergestellte Schicht lassen sich die chemischen und physikalischen Eigenschaften dadurch definiert und insbesondere auch lokal definiert einstellen.

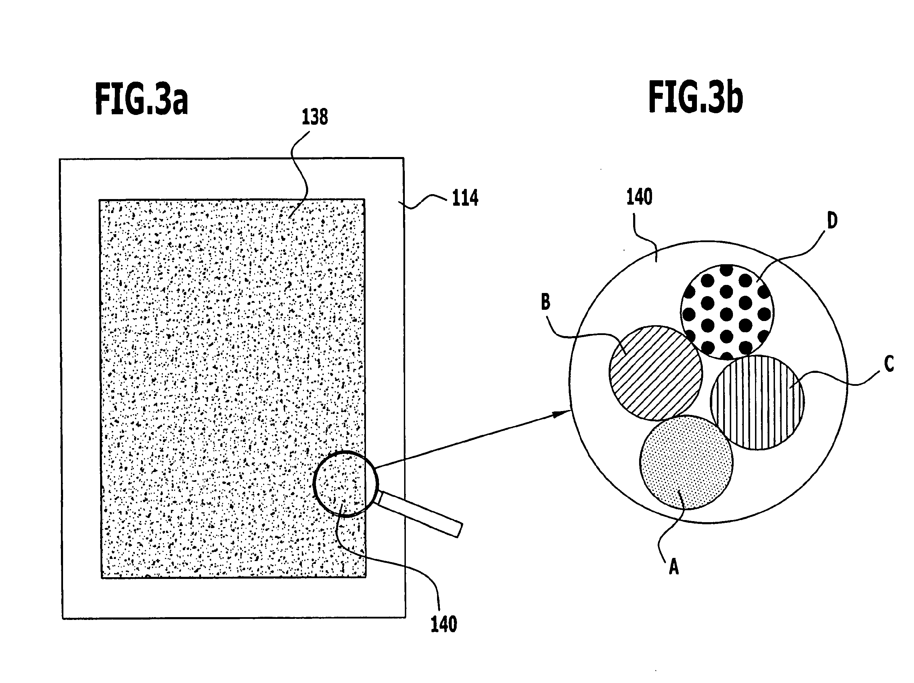

Dies ist schematisch in Figur 3(a) gezeigt: Auf dem Träger 114 ist eine Schicht 138 aufgebracht. Diese Schicht 138 hat Bereiche 140 (Figur 3(a) und (b)), in denen die Pulverpartikel der Pulver A, B, C, D räumlich definiert angeordnet sind.

Durch die individuelle Steuerbarkeit der Aufbringstationen 112 läßt sich dieser Aufbau nach den gewünschten Anforderungen genau einstellen.

Zur Fixierung einer aufgebrachten Schicht kann eine Fixierungseinrichtung 142 vorgesehen sein, welche beispielsweise gegenüberliegende Fixierungswalzen 144 und 146 umfaßt, zwischen welchen der Träger 114 durchführbar ist. Die Fixierungswalzen rotieren dabei insbesondere gegenläufig. Sie können gleichzeitig als Transportwalzen zum Transport des Trägers 114 in der Bewegungsrichtung 116 dienen.

Es kann vorgesehen sein, daß mindestens eine der Fixierungswalzen 144, 146 beheizbar ist.

Es ist auch möglich, daß eine Aufladungseinrichtung 148 vorgesehen ist. Über diese läßt sich der Träger 114 elektrisch aufladen. Über eine Aufladung des Trägers 114 können unter Umständen dessen Eigenschaften beeinflußt werden. Beispielsweise umfaßt die Aufladungseinrichtung 148 eine elektrostatisch geladene Walze 150, an welcher der Träger 114 vorbeigeführt wird. Der Walze 150 kann eine Gegenelektrode beispielsweise in der Form eines Koronadrahts 152 gegenüber liegen. Der Träger wird zwischen der Walze 150 und dem Koronadraht 152 durchgeführt.

Bei dem gezeigten Ausführungsbeispiel ist die Aufladungseinrichtung 148 der letzten Aufbringstation 118d nachgeschaltet und der Fixierungseinrichtung 142 vorgeschaltet. Es ist grundsätzlich auch möglich, daß eine Aufladungseinrichtung vor und/oder nach einer Aufbringstation 112 angeordnet ist.

Durch das erfindungsgemäße Verfahren und die erfindungsgemäße Vorrichtung lassen sich elektrochemische oder elektrische oder thermische Schichten definiert aufbauen und damit definierten Eigenschaften herstellen. (Elektrische Schichten können als elektrochemische Schichten ohne Stoffumsatz angesehen werden.) Insbesondere lassen sich gradierte elektrochemische Reaktionsschichten herstellen.

Bei elektrochemischen Reaktionen, wie sie beispielsweise in einer Brennstoffzelle stattfinden, ist es notwendig, daß mehrere Reaktionspartner an einer Stelle zusammentreffen. Beispielsweise muß bei einer Niedertemperatur-Membran-Brennstoffzelle (PEFC) dafür gesorgt werden, daß ein Dreiphasengebiet vorhanden ist, in dem die Reaktionsgase auf Protonenleiter, Elektronenleiter und Katalysator treffen.

Durch die erfindungsgemäße Lösung ist es möglich, die Struktur einer solchen Reaktionsschicht mikroskopisch aufzubauen, indem beispielsweise neben ein Katalysatorpartikel ein protonenleitendes Partikel gesetzt wird. Durch die individuelle Steuerbarkeit der einzelnen Aufbringstationen 112 läßt sich ein solcher definierter räumlicher Aufbau, welcher wiederum zu definierten - auch lokalen - chemischen und physikalischen Eigenschaften führt, herstellen.

Es ist auch möglich, durch eine entsprechende räumliche Strukturierung eine gezielte Anpassung an die Inhomogenitäten im Reaktionsablauf an der entsprechenden Reaktionsfläche anzupassen. Beispielsweise wird die Katalysatorbeladung oder die Art des Katalysators an die lokalen Anforderungen angepaßt.

Bei dem oben erwähnten Brennstoffzellentyp wird beispielsweise bei den elektrochemischen Reaktionen Wasser gebildet. Über die Länge von Gaskanälen, über die Reaktionsgase zugeführt werden, reichert sich daher Wasser an. Dadurch wiederum neigt eine Brennstoffzelle dazu, in Richtung Gasauslaß aufgrund des sich ansammelnden Wassers zuzulaufen. Wasser verschließt dann die Poren der entsprechenden Elektrode und Reaktionsgas kann dort nicht mehr umgesetzt werden. Um dies zu verhindern, werden Elektroden mit Hydrophobierungsmittel wie PTFE versehen. Wenn jedoch der Hydrophobierungsgrad zu hoch ist, dann neigt die Brennstoffzelle dazu, am Gaseinlaß auszutrocknen. Ein gewisser Wasserfeuchtegrad muß aber in der Elektrode und der Membran (als Träger der Elektrode) erreicht werden, damit Protonenleitung auftreten kann. Es muß also ein Kompromiß bezüglich des Hydrophobierungsgrads gefunden werden.

Durch die erfindungsgemäße Lösung, bei denen elektrochemische Elektroden auf einer Membran als Träger herstellbar sind, kann eben die Schicht lokal definiert hergestellt werden; dazu werden die einzelnen Aufbringstationen 112 mit unterschiedlichen Pulvern beaufschlagt, wobei die jeweilige räumliche Aufbringung individuell gesteuert wird. Es ist dann möglich, die Hydrophobierung an die lokal vorherrschenden Betriebsbedingungen anzupassen. Als Resultat ergibt sich, wenn die elektrochemische Schicht bzw. Schichten entsprechend hergestellt werden, eine gleichmäßigere Stromproduktion mit höheren Strömen.

Durch das erfindungsgemäße Verfahren lassen sich Funktionsschichten wie Reaktionsschichten mit definierter geometrischer Struktur und definierten chemischen und physikalischen Eigenschaften herstellen. Es lassen sich aber auch Strukturschichten mit definierten geometrischen Eigenschaften herstellen.

## Patentansprüche

1. Verfahren zur Herstellung von elektrochemischen oder elektrischen oder thermischen Funktionsschichten mittels Pulvermaterialien, bei dem Pulverpartikel (16) mittels einer Aufbringeinrichtung (14) auf einen Träger (18) aufge-bracht werden, und von der Aufbringeinrichtung (14) Pulverpartikel (16) auf den Träger (18) übertragen werden, wobei die Aufbringeinrichtung (14) elektrostatisch geladen ist oder wird,
**dadurch gekennzeichnet, daß** der Aufbringeinrichtung (14) die Pulverpartikel (16) in Form einer Pulverwolke (30) zugeführt werden.

2. Verfahren nach Anspruch 1, **dadurch gekennzeichnet, daß** ein Bereich der Aufbringeinrichtung (14) mit einer Pulverwolke (30) beaufschlagt wird.

3. Verfahren nach Anspruch 1 oder 2, **dadurch gekennzeichnet, daß** die Aufbringeinrichtung (14) der Pulverwolke (30) ausgesetzt wird.

4. Verfahren nach einem der vorangehenden Ansprüche, **dadurch gekennzeichnet, daß** Pulver aus einem Pulvervorrat und/oder einer Pulverherstellungsvorrichtung direkt der Aufbringeinrichtung (14) zugeführt wird.

5. Verfahren nach einem der vorangehenden Ansprüche, **dadurch gekennzeichnet, daß** von einer Mündungsöffnung (36) einer Pulverzuführungsvorrichtung (34) aus Pulverpartikel (16) direkt auf die Aufbringeinrichtung (14) übertragen werden.

6. Verfahren nach einem der vorangehenden Ansprüche, **dadurch gekennzeichnet, daß** auf der Aufbringeinrichtung (14) definierte geladene und/oder ungeladene Bereiche erzeugt sind oder werden.

7. Verfahren nach einem der vorangehenden Ansprüche, **dadurch gekennzeichnet, daß** die Aufbringeinrichtung (14) mittels einer Walze (14) gebildet wird.

8. Verfahren nach Anspruch 7, **dadurch gekennzeichnet, daß** die Walze (14) eine Fotowalze ist.

9. Verfahren nach einem der Ansprüche 1 bis 6, **dadurch gekennzeichnet, daß** die Aufbringeinrichtung (14) eine Platte umfaßt.

10. Verfahren nach einem der vorangehenden Ansprüche, **dadurch gekennzeichnet, daß** auf den Träger (18) aufgebrachte Pulverpartikel (16) fixiert werden.

11. Verfahren nach Anspruch 10, **dadurch gekennzeichnet, daß** die Fixierung durch Walzung erfolgt.

12. Verfahren nach einem der vorangehenden Ansprüche, **dadurch gekennzeichnet, daß** der Träger (18) an einer Mehrzahl von Aufbringstationen (112) zur Aufbringung von Pulverpartikeln (16) auf den Träger (18) vorbeigeführt wird und an den einzelnen Aufbringstationen (112) die Aufbringung von Pulverpartikeln (16) auf den Träger (18) individuell räumlich gesteuert wird.

13. Verfahren nach Anspruch 12, **dadurch gekennzeichnet, daß** die Aufbringstationen (112) in einer Reihe angeordnet sind.

14. Verfahren nach Anspruch 12 oder 13, **dadurch gekennzeichnet, daß** jeder Aufbringstation (112) Pulver individuell zugeführt wird.

15. Verfahren nach einem der Ansprüche 12 bis 14, **dadurch gekennzeichnet, daß** eine jeweilige Aufbringstation (112) eine Aufbringeinrichtung (120) aufweist, welcher Pulver zugeführt wird.

16. Verfahren nach einem der Ansprüche 12 bis 15 **dadurch gekennzeichnet, daß** über unterschiedliche Aufbringstationen (112) unterschiedliche Pulvermaterialien auf den Träger (18) aufgebracht werden.

17. Verfahren nach einem der Ansprüche 12 bis 16, **dadurch gekennzeichnet, daß** durch das Vorbeiführen des Trägers (18) an den Aufbringstationen (112) eine elektrochemische oder elektrische oder thermische Schicht mit räumlich definierter Zusammensetzung aus Pulverpartikeln (16) hergestellt wird.

18. Verfahren nach einem der vorangehenden Ansprüche, **dadurch gekennzeichnet, daß** die chemischen und physikalischen Eigenschaften der Schicht durch Steuerung der Pulveraufbringung eingestellt werden.

19. Verfahren nach einem der vorangehenden Ansprüche, **dadurch gekennzeichnet, daß** der Träger (18) aufgeladen wird.

20. Vorrichtung zur Herstellung von elektrochemischen oder elektrischen oder thermischen Schichten aus Pulvermaterialien auf einem Träger, mit einer Aufbringeinrichtung (14) zum Übertragen von Pulverpartikeln (16) auf den Träger (18), welche elektrostatisch geladen ist oder geladen werden kann, und einer Zuführungsvorrichtung (34) für Pulver zu der Aufbringeinrichtung (14), **dadurch gekennzeichnet, daß** über die Zuführungsvorrichtung (34) die Aufbringeinrichtung (14) mit einer Pulverwolke (30) beaufschlagbar ist.

21. Vorrichtung nach Anspruch 20, **dadurch gekennzeichnet, daß** die Zuführungsvorrichtung (34) eine Mündungsöffnung (36) umfaßt, welche auf die Aufbringeinrichtung (14) zu weist.

22. Vorrichtung nach Anspruch 21, **dadurch gekennzeichnet, daß** die Mündungsöffnung (36) der Aufbringeinrichtung (14) direkt gegenüberliegt.

23. Vorrichtung nach Anspruch 21 oder 22, **dadurch gekennzeichnet, daß** die Mündungsöffnung (36) in ihrer Gestalt an die Aufbringeinrichtung (14) angepaßt ist.

24. Vorrichtung nach einem der Ansprüche 20 bis 23, **dadurch gekennzeichnet, daß** die Zuführungsvorrichtung (34) und/oder eine Mündungsöffnung (36) der Zuführungsvorrichtung (34) in fluidwirksamer Verbindung mit einem Pulvervorrat und/oder einer Pulverherstellungsvorrichtung steht.

25. Vorrichtung nach einem der Ansprüche 20 bis 24, **dadurch gekennzeichnet, daß** definierte Bereiche (26) der Aufbringeinrichtung (14) elektrostatisch ladbar und/oder entladbar sind.

26. Vorrichtung nach einem der Ansprüche 20 bis 25, **dadurch gekennzeichnet, daß** die Aufbringeinrichtung mittels einer Walze (14) gebildet ist.

27. Vorrichtung nach Anspruch 26, **dadurch gekennzeichnet, daß** die Walze (14) als Fotowalze ausgebildet ist.

28. Vorrichtung nach einem der Ansprüche 20 bis 24, **dadurch gekennzeichnet, daß** die Aufbringeinrichtung eine Platte umfaßt.

29. Vorrichtung nach einem der Ansprüche 20 bis 28, **dadurch gekennzeichnet, daß** eine Fixierungseinrichtung (44) zur Fixierung von auf den Träger (18) aufgebrachten Pulverpartikeln vorgesehen ist.

30. Vorrichtung nach Anspruch 29, **dadurch gekennzeichnet, daß** die Fixierungseinrichtung eine oder mehrere Fixierungswalzen (46; 48) umfaßt.

31. Vorrichtung nach einem der Ansprüche 20 bis 30, **dadurch gekennzeichnet, daß** eine Mehrzahl von Aufbringstationen (112) vorgesehen ist, an welchen der Träger (114) vorbeiführbar ist, wobei die Pulveraufbringung an jeder Aufbringstation (112) individuell steuerbar ist.

32. Vorrichtung nach Anspruch 31, **dadurch gekennzeichnet, daß** die Aufbringstationen (112) nebeneinander angeordnet sind.

33. Vorrichtung nach Anspruch 31 oder 32, **dadurch gekennzeichnet, daß** die Pulveraufbringung in jeder Aufbringstation (112) räumlich steuerbar ist.

34. Vorrichtung nach einem der Ansprüche 31 bis 33, **dadurch gekennzeichnet, daß** jeder Aufbringstation (112) individuell Pulver zuführbar ist.

35. Vorrichtung nach einem der Ansprüche 31 bis 34, **dadurch gekennzeichnet, daß** eine einzelne Aufbringstation (112) eine Aufbringeinrichtung (120) umfaßt, mittels welcher Pulverpartikel auf den Träger (114) übertragbar sind.

36. Vorrichtung nach einem der Ansprüche 20 bis 35, **dadurch gekennzeichnet, daß** eine Aufladungseinrichtung (148) zur elektrischen Aufladung des Trägers (114) vorgesehen ist.

## Claims

1. Method for the production of electrochemical or electrical or thermal functional layers using powder materials, wherein powder particles (16) are applied to a substrate (18) by means of an applying device (14), and powder particles (16) are transferred from the applying device (14) to the substrate (18), and the applying device (14) is electrostatically charged,
**characterized in that** the powder particles (16) are fed in the form of a powder cloud (30) to the applying device (14).

2. Method in accordance with claim 1, **characterized in that** an area of the applying device (14) is acted upon with a powder cloud (30).

3. Method in accordance with claim 1 or 2, **characterized in that** the applying device (14) is exposed to the powder cloud (30).

4. Method in accordance with any one of the preceding claims,
**characterized in that** powder is fed directly to the applying device (14) from a powder reservoir and/or a powder producing device.

5. Method in accordance with any one of the preceding claims,
**characterized in that** powder particles (16) are transferred directly to the applying device (14) from an orifice (36) of a powder feeding device (34).

6. Method in accordance with any one of the preceding claims,
**characterized in that** defined areas which are charged and/or uncharged are generated on the applying device (14).

7. Method in accordance with any one of the preceding claims,
**characterized in that** the applying device (14) is formed by a roller (14).

8. Method in accordance with claim 7, **characterized in that** the roller (14) is a photo drum.

9. Method in accordance with any one of claims 1 to 6, **characterized in that** the applying device (14) comprises a plate.

10. Method in accordance with any one of the preceding claims,
**characterized in that** powder particles (16) applied to the substrate (18) are fixed.

11. Method in accordance with claim 10, **characterized in that** the fixing is carried out by rolling.

12. Method in accordance with any one of the preceding claims,
**characterized in that** the substrate (18) is conducted past a plurality of application stations (112) for the application of powder particles (16) to the substrate (18), and the application of powder particles (16) to the substrate (18) is individually spatially controlled at the individual application stations (112).

13. Method in accordance with claim 12, **characterized in that** the application stations (112) are arranged in a row.

14. Method in accordance with claim 12 or 13, **characterized in that** powder is individually fed to each application station (112).

15. Method in accordance with any one of claims 12 to 14, **characterized in that** a respective application station (112) comprises an applying device (120) to which powder is fed.

16. Method in accordance with any one of claims 12 to 15, **characterized in that** different powder materials are applied to the substrate (18) via different application stations (112).

17. Method in accordance with any one of claims 12 to 16, **characterized in that** an electrochemical or electrical or thermal layer with a spatially defined composition of powder particles (16) is produced by conducting the substrate (18) past the application stations (112).

18. Method in accordance with any one of the preceding claims,
**characterized in that** the chemical and physical properties of the layer are set by controlling the application of the powder.

19. Method in accordance with any one of the preceding claims,
**characterized in that** the substrate (18) is charged.

20. Apparatus for the production of electrochemical or electrical or thermal layers from powder materials on a substrate, comprising an applying device (14), which is or can be electrostatically charged, for transferring powder particles (16) to the substrate (18), and a feeding device (34) for feeding powder to the applying device (14), **characterized in that** the applying device (14) can be acted upon with a powder cloud (30) via the feeding device (34).

21. Apparatus in accordance with claim 20, **characterized in that** the feeding device (34) comprises an orifice (36) which points towards the applying device (14).

22. Device in accordance with claim 21, **characterized in that** the orifice (36) is located directly opposite the applying device (14).

23. Device in accordance with claim 21 or 22, **characterized in that** the orifice (36) is adapted in its configuration to the applying device (14).

24. Apparatus in accordance with any one of claims 20 to 23, **characterized in that** the feeding device (34) and/or an orifice (36) of the feeding device (34) is in fluidically effective communication with a powder reservoir and/or a powder producing device.

25. Apparatus in accordance with any one of claims 20 to 24, **characterized in that** defined areas (26) of the applying device (14) are electrostatically chargeable and/or dischargeable.

26. Apparatus in accordance with any one of claims 20 to 25, **characterized in that** the applying device is formed by a roller (14).

27. Apparatus in accordance with claim 26, **characterized in that** the roller (14) is in the form of a photo drum.

28. Apparatus in accordance with any one of claims 20 to 24, **characterized in that** the applying device comprises a plate.

29. Apparatus in accordance with any one of claims 20 to 28, **characterized in that** a fixing device (44) is provided for fixing powder particles applied to the substrate (18).

30. Apparatus in accordance with claim 29, **characterized in that** the fixing device comprises one or more fixing rollers (46; 48).

31. Apparatus in accordance with any one of claims 20 to 30, **characterized in that** a plurality of application stations (112) are provided, past which the substrate (114) can be conducted, and the application of the powder is individually controllable at each application station (112).

32. Apparatus in accordance with claim 31, **characterized in that** the application stations (112) are arranged next to one another.

33. Apparatus in accordance with claim 31 or 32, **characterized in that** the application of the powder is spatially controllable in each application station (112).

34. Apparatus in accordance with any one of claims 31 to 33, **characterized in that** powder is individually feedable to each application station (112).

35. Apparatus in accordance with any one of claims 31 to 34, **characterized in that** a single application station (112) comprises an applying device (120) by means of which powder particles are transferable to the substrate (114).

36. Apparatus in accordance with any one of claims 20 to 35, **characterized in that** a charging device (148) is provided for electrically charging the substrate (114).

## Revendications

1. Procédé de fabrication de couches fonctionnelles électrochimiques ou électriques ou thermiques au moyen de matériaux en poudre, dans le cadre duquel des particules de poudre (16) sont appliquées sur un support (18) au moyen d'un dispositif d'application (14) et des particules de poudre (16) sont transférées du dispositif d'application (14) au support (18), le dispositif d'application (14) étant chargé de manière électrostatique,
**caractérisé en ce que** les particules de poudre (16) sont amenées au dispositif d'application (14) sous forme de nuage de poussière (30).

2. Procédé selon la revendication 1, **caractérisé en ce qu'**une zone du dispositif d'application (14) est alimentée en nuage de poussière (30).

3. Procédé selon la revendication 1 ou 2, **caractérisé en ce que** le dispositif d'application (14) est exposé au nuage de poussière (30).

4. Procédé selon l'une quelconque des revendications précédentes, **caractérisé en ce que** de la poudre est amenée directement d'un réservoir de poudre et/ou d'un dispositif de fabrication de poudre au dispositif d'application (14).

5. Procédé selon l'une quelconque des revendications précédentes, **caractérisé en ce que** des particules de poudre (16) sont transférées directement d'une ouverture d'embouchure (36) d'un dispositif d'alimentation sen poudre (34) au dispositif d'application (14).

6. Procédé selon l'une quelconque des revendications précédentes, **caractérisé en ce que** des zones chargées et/ou non chargées définies sont ou seront générées sur le dispositif d'application (14).

7. Procédé selon l'une quelconque des revendications précédentes, **caractérisé en ce que** le dispositif d'application (14) est formé par un cylindre (14).

8. Procédé selon la revendication 7, **caractérisé en ce que** le cylindre (14) est un cylindre photo.

9. Procédé selon l'une quelconque des revendications 1 à 6, **caractérisé en ce que** le dispositif d'application (14) comprend une plaque.

10. Procédé selon l'une quelconque des revendications précédentes, **caractérisé en ce que** des particules de poussière (16) appliquées sont fixées sur le support (18).

11. Procédé selon la revendication 10, **caractérisé en ce que** la fixation se fait par cylindrage.

12. Procédé selon l'une quelconque des revendications précédentes, **caractérisé en ce que** le support (18) est conduit devant une pluralité de stations d'application (112) pour l'application de particules de poudre (16) sur le support (18) et l'application de particules de poudre (16) sur le support (18) est commandée individuellement dans l'espace au niveau de chaque station d'application (112).

13. Procédé selon la revendication 12, **caractérisé en ce que** les stations d'application (112) sont alignées.

14. Procédé selon la revendication 12 ou 13, **caractérisé en ce que** de la poudre est amenée individuellement à chaque station d'application (112).

15. Procédé selon l'une quelconque des revendications 12 à 14, **caractérisé en ce qu'**une station d'application (112) respective présente un dispositif d'application (120), auquel est amenée de la poudre.

16. Procédé selon l'une quelconque des revendications 12 à 15, **caractérisé en ce que** différents matériaux en poudre sont appliqués sur le support (18) par le biais de différentes stations d'application (112).

17. Procédé selon l'une quelconque des revendications 12 à 16, **caractérisé en ce qu'**une couche électrochimique ou électrique ou thermique avec une composition définie dans l'espace en particules de poudre (16) est fabriquée en amenant le support (18) devant les stations d'application (112).

18. Procédé selon l'une quelconque des revendications précédentes, **caractérisé en ce que** les propriétés chimiques et physiques de la couche sont réglées par commande de l'application de poudre.

19. Procédé selon l'une quelconque des revendications précédentes, **caractérisé en ce que** le support (18) est chargé.

20. Dispositif de fabrication de couches électrochimiques ou électriques ou thermiques en matériaux en poudre sur un support, avec un dispositif d'application (14) destiné au transfert de particules de poudre (16) sur le support (18) et chargé ou pouvant être chargé de manière électrostatique et un dispositif d'alimentation (34) pour poudre au dispositif d'application (14), **caractérisé en ce que** le dispositif d'application (14) peut être alimenté en nuage de poussière (30) par le biais du dispositif d'alimentation (34).

21. Dispositif selon la revendication 20, **caractérisé en ce que** le dispositif d'alimentation (34) comprend une ouverture d'embouchure (36), qui est tournée vers le dispositif d'application (14).

22. Dispositif selon la revendication 21, **caractérisé en ce que** l'ouverture d'embouchure (36) fait directement face au dispositif d'application (14).

23. Dispositif selon la revendication 21 ou 22, **caractérisé en ce que** la forme de l'ouverture d'embouchure (36) est adaptée au dispositif d'application (14).

24. Dispositif selon l'une quelconque des revendications 20 à 23, **caractérisé en ce que** le dispositif d'alimentation (34) et/ou une ouverture d'embouchure (36) du dispositif d'alimentation (34) est en liaison active du point de vue fluidique avec un réservoir de poudre et/ou un dispositif de fabrication de poudre.

25. Dispositif selon l'une quelconque des revendications 20 à 24, **caractérisé en ce que** des zones définies (26) du dispositif d'application (14) peuvent être chargées et/ou déchargées de manière électrostatique.

26. Dispositif selon l'une quelconque des revendications 20 à 25, **caractérisé en ce que** le dispositif d'application est réalisé par un cylindre (14).

27. Dispositif selon la revendication 26, **caractérisé en ce que** le cylindre (14) est réalisé sous forme de cylindre photo.

28. Dispositif selon l'une quelconque des revendications 20 à 24, **caractérisé en ce que** le dispositif d'application comprend une plaque.

29. Dispositif selon l'une quelconque des revendications 20 à 28, **caractérisé en ce qu'**un dispositif de fixation (44) est prévu pour la fixation de particules de poudre appliquées sur le support (18).

30. Dispositif selon la revendication 29, **caractérisé en ce que** le dispositif de fixation comprend un ou plusieurs cylindres de fixation (46 ; 48)

31. Dispositif selon l'une quelconque des revendications 20 à 30, **caractérisé en ce qu'**il est prévu une pluralité de stations d'application (112), devant desquelles le support (114) peut être conduit, l'application de poudre pouvant être commandée individuellement au niveau de chaque station d'application (112).

32. Dispositif selon la revendication 31, **caractérisé en ce que** les stations d'application (112) sont agencées les unes à côté des autres.

33. Dispositif selon la revendication 31 ou 32, **caractérisé en ce que** l'application de poudre peut être commandée spatialement dans chaque station d'application (112).

34. Dispositif selon l'une quelconque des revendications 31 à 33, **caractérisé en ce que** de la poudre peut être amenée individuellement à chaque station d'application (112).

35. Dispositif selon l'une quelconque des revendications 31 à 34, **caractérisé en ce qu'**une seule station d'application (112) comprend un dispositif d'application (120), au moyen duquel des particules de poudre peuvent être transférées au support (114).

36. Dispositif selon l'une quelconque des revendications 20 à 35, **caractérisé en ce qu'**un dispositif de charge (148) est prévu pour la charge électrique du support (114).
